# EUROPÄISCHE PATENTSCHRIFT

(11) **EP 1 992 392 B1**
(45) Veröffentlichungstag und Bekanntmachung des Hinweises auf die Patenterteilung: **02.09.2015**
(21) Anmeldenummer: 08103720.2
(22) Anmeldetag: 25.04.2008
(51) Int. Cl.: B01D 5/00, F28D 7/00

(54) **Vorrichtung zum Kühlen von Stoffströmen**
Device for cooling material flows
Dispositif de refroidissement de flux de matière

(30) Priorität: 18.05.2007 DE 102007023379
(43) Veröffentlichungstag der Anmeldung: 19.11.2008
(73) Patentinhaber: Messer Group GmbH, 65812 Bad Soden (DE)
(72) Erfinder: Herzog, Friedhelm, 47803, Krefeld (DE); Terkatz, Stefan, 47807, Krefeld (DE)
(74) Vertreter: Münzel, Joachim R.

(56) Entgegenhaltungen:
- EP-A1- 1 674 140
- DE-A1- 10 161 368
- DE-C1- 10 223 845
- DE-C1- 19 645 487
- FR-A1- 2 846 735
- GB-A- 1 038 138
- GB-A- 1 197 348
- US-A- 4 668 261
- US-A- 5 996 356
- US-A1- 2003 094 268
- US-B1- 6 536 511

## Beschreibung

Die Erfindung betrifft eine Vorrichtung zum Kühlen eines Stoffstroms mit den Merkmalen des Oberbegriffs von Patentanspruch 1.

Derartige Vorrichtungen sind bekannt und werden zur Kühlung von gasförmigen, flüssigen oder auch schüttbaren oder rieselfähigen Feststoffen eingesetzt. Insbesondere dienen sie dazu, Gasströme durch Kondensation oder Ausfrieren von im Gas enthaltenen Verunreinigungen zu reinigen. Unter "Gasen" sind hier allgemein Abluft-, Abgas oder Prozessgasströme gemeint, die aus Dampf, dampfförmigen Stoffen oder Gasen bestehen können. Insbesondere sind darunter auch relativ hoch mit Lösemitteln beladene Abluftströme gemeint, wie sie beispielsweise bei bestimmten Prozessen in der Chemie oder als Abgase aus Tanklagern entstehen. Unter dem Begriff "Verunreinigungen" sind hier sowohl das Gas verunreinigende und zu entsorgende Schadstoffe als auch Lösemittel oder sonstige Stoffe zu verstehen, die als Wertstoffe einer weiteren Verwendung zugeführt werden können.

Nach dem Stand der Technik kommen direkte oder indirekte Wärmetauscher zum Einsatz. Bei direkten Wärmetauschern erfolgt ein direkter Kontakt des zu reinigenden Gases mit dem Kühlmedium, beispielsweise in Form einer Dusche. Bei indirekten Wärmetauschern wird der zu reinigende Gasstrom an Wärmetauscherflächen mit einem Kühlmedium in Kontakt gebracht. Die Wärmetauscherflächen können dabei verschiedenartig ausgestaltet sein und sind in der Regel so ausgelegt, dass ein möglichst großer Wärmeübertrag erfolgt. Wird durch den Kontakt mit den Wärmetauscherflächen bzw. mit dem Kühlmedium die Temperatur des Gases so weit erniedrigt, dass dabei der Taupunkt der im Gasstrom vorhandenen Verunreinigungen unterschritten wird, verflüssigt oder verfestigt sich zumindest ein Teil dieser Stoffe und kann vom Trägergasstrom abgetrennt werden.

So werden beispielsweise in der US 4 188 793 verschiedene, direkt oder indirekt arbeitende Apparaturen beschrieben, bei denen dampfförmige Komponenten durch Kondensation aus Gasströmen entfernt werden. In einer dieser Apparaturen kommt ein Rohrbündelwärmetauscher zum Einsatz, in dem der zu kühlende Stoffstrom mit gasförmigem Stickstoff als Kühlmedium in Wärmekontakt gebracht wird. Der zur Kühlung des Stoffstroms eingesetzte Stickstoff wird durch Verdampfen von Flüssigstickstoff in einem Verdampfungswärmetauscher erzeugt. Zum Verdampfen des Flüssigstickstoffs wird der im Produktkühlwärmetauscher erwärmte gasförmige Stickstoff in den Verdampfungswärmetauscher zumindest teilweise rückgeführt und mit dem Flüssigstickstoff in Wärmekontakt gebracht.

Aus der DE 19517273 C1 ist ein Verfahren sowie eine Vorrichtung zur Abgasreinigung mit Wärmetauschern bekannt, bei dem in einem ersten Wärmetauscher eine Reinigung des Prozessgases in der oben beschriebenen Weise erfolgt. Um eine Rekontamination des austretenden Gases mit Kondensat zu verhindern, kommt ein zweiter Wärmetauscher zum Einsatz, in dem der Gasstrom derart geführt wird, dass er in einer aufwärtsgerichteten Strömung mit den Wärmetauscherflächen in Kontakt kommt. Durch diese Anordnung sammelt sich das Kondensat im Eingangsbereich des zweiten Wärmetauschers an und kann abgeführt werden.

Der Anteil der aus dem Trägergas abgetrennten Stoffmenge gegenüber der insgesamt im Gas vorhandenen Stoffmenge ist in erster Linie vom Grad der Taupunktunterschreitung abhängig. Beim Abkühlprozess kommt es jedoch in der Regel zu einer Übersättigung des Gasstroms und zur Bildung von Aerosolen. Da die Aerosole im Wärmetauscher nur zu einem sehr kleinen Teil abgeschieden werden, ist die tatsächlich vom Trägergasstrom abtrennbare Stoffmenge kleiner als die aufgrund der temperaturabhängigen Dampfdrücke der Stoffe theoretisch erreichbare Abscheidung. Die Aerosole bilden so einen erheblichen Anteil der mit dem Trägergasstrom den Kondensator verlassenden Verunreinigungen.

Um die Ausbildung von Aerosolen zu begrenzen wird in der EP 1 674 140 A1 vorgeschlagen, das mit dem zu reinigenden Rohgas in einem Kryokondensator in Kontakt tretende Kühlmedium vor seiner Zuführung an den Kryokondensator mit dem aus dem Kryokondensator abgeführten erwärmten Kühlmedium vorzuwärmen. Zugleich wird das herangeführte Rohgas vor seiner Zuführung an den Kryokondensator mit dem im Kryokonensator abgekühlten Rohgas in einem Vorkühler vorgekühlt. Auf diese Weise wird die Temperaturdifferenz zwischen dem Kühlmedium und dem zu reinigenden Rohgas minimiert und die Ausbildung von Aerosolen stark unterdrückt.

Nachteilig bei diesem Gegenstand sind jedoch auftretende Wärmeverluste in den Zuleitungen zwischen den Wärmetauschern, aufgrund derer die Temperaturdifferenz zwischen den Medien vergrößert und somit die Aerosolbildung nicht in dem Maße unterdrückt wird, wie dies theoretisch möglich wäre.

Aufgabe der vorliegenden Erfindung ist daher, eine Vorrichtung zu schaffen, mit der die Ausbildung von Aerosolen weiter unterdrückt und Wärmeverluste minimiert werden.

Gelöst ist diese Aufgabe durch eine Vorrichtung der eingangs genannten Art mit den Merkmalen des Patentanspruchs 1.

Erfindungsgemäß wird also die Verdampfung des kondensierten Gases und die Abkühlung des Prozessgases in einem einzigen Apparat durchgeführt, wobei der Verdampfungswärmetauscher im Produktkühlwärmetauscher aufgenommen ist und durch eine eigene Wärmetauscherfläche zur Kühlung des Stoffstroms beiträgt. Durch die Anordnung der Wärmetauscher in einem einzigen Apparat ergeben sich verfahrenstechnische Vorteile wie beispielsweise geringere Wärmeverluste und geringere Druckverluste sowie günstigere Ausnutzung der Wärmetauscherflächen und ein geringeres Gesamtgewicht. Es ergeben sich zudem Kostenersparnisse durch die kompakte Bauweise sowie Ersparnisse aufgrund eines geringeren Aufwandes für externe Verrohrung und Isolation.

Die Erfindung sieht dabei vor, dass der Produktkühlwärmetauscher eine Zuführung und eine Ableitung für ein zweites Kühlmedium sowie Wärmetauscherflächen zum Wärmetausch des Stoffstroms mit dem zweiten Kühlmedium umfasst, wobei die Zuführung für das zweite Kühlmedium mit der Ableitung für das gasförmige Medium aus dem Verdampfungswärmetauscher strömungsverbunden ist. Auf diese Weise wird der Kälteinhalt des Kühlmediums noch besser genutzt.

In einem besonders bevorzugten apparativen Aufbau der erfindungsgemäßen Vorrichtung sind im Produktkühlwärmetauscher die Wärmetauscherflächen für das erste Kühlmedium und für das zweite Kühlmedium als zumindest abschnittsweise parallel geführte Rohrbündel ausgeführt, die innerhalb eines gemeinsamen Gehäuses von dem zu kühlenden Stoffstrom umströmt werden. Die Parallelführung sorgt dafür, dass die jeweiligen Eintritts- und Austrittstemperaturen der Kaltgasströme (Kühlmediumströme) zumindest annähernd gleich sind. Dadurch arbeitet der Apparat thermodynamisch im nahezu optimalen Bereich.

Um eine möglichst gute Kühlwirkung zu erzielen, wird das erste Kühlmedium und/oder das zweite Kühlmedium im Produktkühlwärmetauscher bevorzugt im Gegenstrom zum Stoffstrom geführt.

Eine abermals vorteilhafte Ausgestaltung der Erfindung sieht vor, dass die Ableitung für das erste Kühlmedium im Produktkühlwärmetauscher mit der Zuleitung für das gasförmige Medium im Verdampfungswärmetauscher strömungsverbunden ist. Nach Durchlaufen des Produktkühlwärmetauschers dient das erste Kühlmedium also zum Verdampfen des kondensierten Gases im Verdampfungswärmetauscher. Auf diese Weise wird die dem ersten Kühlmedium aufgrund des Wärmetausches mit dem Stoffstrom zugeführte Wärme zum Verdampfen des kondensierten Gases genutzt.

In einer weiteren bevorzugten Ausführungsform der Erfindung weist die Vorrichtung einen zusätzlichen Wärmetauscher auf, mittels dessen der zu kühlende Stoffstrom mit dem bereits gekühlten Stoffstrom in thermischen Kontakt gebracht wird. Hierzu ist eine Ableitung für den Stoffstrom aus dem Produktkühlwärmetauscher mit einer Wärmetauscherfläche im Produktkühlwärmetauscher strömungsverbunden, an der der aus dem Produktkühlwärmetauscher geführte Stoffstrom mit dem zu kühlenden Stoffstrom im Produktkühlwärmetauscher in Wärmeaustausch steht. Die zusätzliche Wärmetauscherfläche stellt somit einen so genannten Rekuperator dar, in welchem der Kälteinhalt des bereits gekühlten Stoffstroms an der Kühlung des Stoffstroms mitwirkt.

Vorzugsweise ist der Produktkühlwärmetauscher mit Mitteln zum Ableiten von kondensierten Bestandteilen ausgerüstet. Diese Ausführungsform ist besonders dann bevorzugt, wenn die Vorrichtung zur kryogenen Abgasreinigung eingesetzt werden soll, also die Reinigung des Stoffstroms mit der thermischen Wirkung eines kryogenen Kältemittels erfolgen soll, beispielsweise Stickstoff, das dem Verdampfungswärmetauscher in verflüssigtem Zustand zugeführt, dort verdampft und in Form von kaltem Gas mit einer Temperatur von beispielsweise 160°C als Kühlmedium dem Produktkühlwärmetauscher zugeführt wird. Die aus dem zu reinigenden Prozessgas entfernten Verunreinigungen werden aufgrund der starken Kühlwirkung sicher entfernt; das so gewonnene Kondensat kann weiterverwertet oder sicher entsorgt werden.

Bevorzugt umfasst der Verdampfungswärmetauscher ein vom zu verdampfenden Gas durchströmtes Röhrbündel, das in einem vom gasförmigen Medium durchströmten Mantel aufgenommen ist. Dabei ist das zur Verdampfung des kryogenen Kühlmediums eingesetzte gasförmige Medium an zumindest Abschnitten des Mantels mit dem Stoffstrom in Wärmeaustausch steht. Die Außenwand des Verdampfungswärmetauchers dient also zumindest abschnittsweise als Wärmetauscherfläche. Auf diese Weise werden aufwendige Isolierungen am Verdampfungswärmetauscher eingespart.

Anhand der Zeichnungen sollen nachfolgend Ausführungsbeispiele der Erfindung näher erläutert werden.

In schematischen Ansichten zeigen:
Fig. 1: Eine erfindungsgemäße Vorrichtung in einer ersten Ausführungsform,
Fig. 2: Eine erfindungsgemäße Vorrichtung in einer zweiten Ausführungsform mit zusätzlichem Rekuperator.

Die Vorrichtung 1 umfasst einen in seiner Gesamtheit hier als Kondensator 2 bezeichneten Apparat zum Kühlen eines Stoffstroms, im Ausführungsbeispiel eines Prozessgasstroms. Der Kondensator 2 umfasst ein Gehäuse 3 mit thermisch isolierten Außenwänden, innerhalb dessen zwei funktionelle Einheiten vorgesehen sind, nämlich einen im Kern des Kondensators 2 angeordneten Verdampfungswärmetauscher 5 und einen sich radial um den Umfang des Verdampfungswärmetauschers 5 herum anschließenden Produktkühlwärmetauscher 6. Der Verdampfungswärmetauscher 5 dient zum Verdampfen eines zum Kühlen des Prozessgases eingesetzten kryogenen Kühlmediums. Als kryogenes Kühlmedium kommt dabei bevorzugt Stickstoff zum Einsatz, der im Verdampfungswärmetauscher 5 verdampft und anschließend in Form von kaltem Stickstoffgas zur Kühlung des Prozessgases im Produktkühlwärmetauscher eingesetzt wird. Im Produktkühlwärmetauscher 6 wird ein Gasstrom gekühlt mit dem Ziel, im Prozessgas enthaltene gas- oder dampfförmige "Verunreinigungen" (gemäß obiger Definition) durch Kondensation aus dem Prozessgas zu entfernen und abzuleiten.

Der Wärmetausch in den Wärmetauschern 5,6 erfolgt dabei in erster Linie an Rohrbündeln 7,7'; 8,8'; 9,9', also Gruppen von geraden oder wendelförmig gebogenen Röhren mit thermisch gut leitenden Wänden, die sich im Gehäuse 3 ungefähr parallel zueinander zwischen zwei horizontal voneinander beabstandeten und mit Ausnahme von Strömungsdurchführungen für die Rohrbündel 7,7'; 8,8' und für den Verdampfungswärmetauscher 5 strömungsdichten Trennblechen 11,12 erstrecken. Die Rohrbündel 7,7'; 8,8';9,9' bestehen in der Regel aus einer Vielzahl einzelner Röhren; lediglich aus Gründen der Übersichtlichkeit werden in den Zeichnungen die Rohrbündel 7,7'; 8,8'; 9,9' durch jeweils zwei, ungefähr symmetrisch zueinander angeordnete, gerade Röhren repräsentiert. Das Trennblech 11 trennt einen Kopfraum 13 des Gehäuses 3 von den Wärmetauschern 5,6 ab. Im Kopfraum 13 ist ein Trennelement 14 vorgesehen, das die Rohrbündel 8,8' und 9,9' strömungstechnisch voneinander trennt. Desgleichen trennt das Trennblech 12 einen Bodenbereich 16 des Gehäuses 3 von den Wärmetauschern 5,6. Der Bodenbereich 16 dient zur Aufnahme eines Kondensatbades 17 aus vom Prozessgas abgetrenntem Kondensat. Auch im Bodenbereich 16 sind Trennelemente 19, 20 vorgesehen, mit denen die Rohrbündel 8,8'; 9,9' strömungstechnisch voneinander sowie vom Kondensatbad 17 getrennt werden. Die Rohrbündel 8,8'; 9,9' des Produktkühlwärmetauschers 6 sind von einem Produktführungsraum 22 umgeben, durch den beim Einsatz der Vorrichtung 1 das zu kühlende, bzw. zu reinigende Prozessgas geführt wird. Dieser Produktführungsraum 22 steht mit dem Kondensatbad 17 über eine Leitung 23 in Strömungsverbindung.

Der Verdampfungswärmetauscher 5 ist durch einen sich zwischen den Trennblechen 11, 12 erstreckenden und die Rohrbündel 7,7' ungefähr zylinderförmig umschließenden Verdampfermantel 24 strömungsdicht vom Produktführungsraum 22 des Produktkühlwärmetauschers 6 abgetrennt, der sich im Bereich einer entsprechenden Durchführung im Trennblech 11 bis in den Kopfraum 13 hinein erstreckt. Der Verdampfermantel 24 begrenzt einen Mantelraum 25 des Verdampfungswärmetauschers 5, der von dem zum Verdampfen des kryogenen Kühlmediums erforderlichen Wärmeaustauschmedium durchströmt wird. Der Verdampfermantel 24 besteht im Ausführungsbeispiel aus einem thermisch gut leitenden Material und wirkt daher als zusätzliche Wärmetauscherfläche für die Kühlung des Prozessgases im Produktkühlwärmetauscher 6. Im Bereich des Kopfraums 13 weist der Verdampfermantel 24 eine Durchführung 27 zu dem von dem Trennelement 14 abgegrenzten Bereich des Kopfraums 13 auf, wodurch eine Strömungsverbindung vom Mantelraum 25 des Verdampfungswärmetauschers 5 zum Rohrbündel 8,8' hergestellt wird.

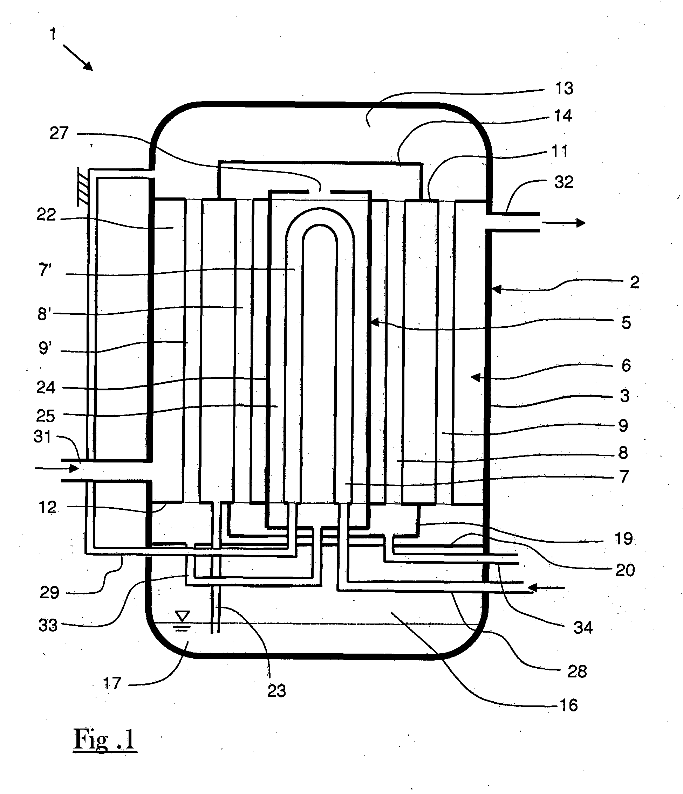

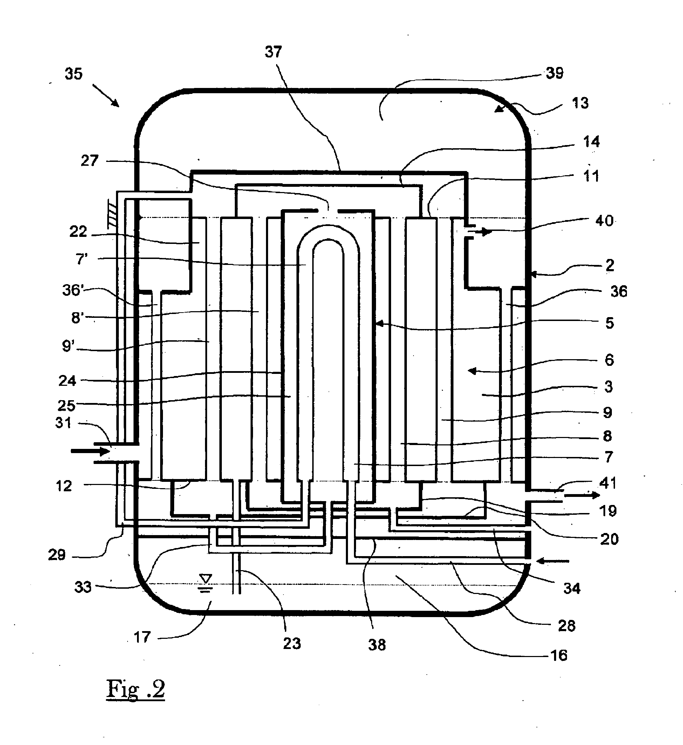

Zum Verdampfen des kryogenen Kühlmediums wird das Kühlmedium im flüssigen Zustand aus einer hier nicht gezeigten Flüssigversorgung (beispielsweise ein Tank mit flüssigem Stickstoff) über eine Leitung 28 zu den Rohrbündeln 7,7' geleitet. Durch Wärmetausch mit einem die Rohrbündel 7,7' im Mantelraum 25 umströmenden gasförmigem Medium verdampft das Kühlmedium und gelangt über eine Leitung 29 in den Produktkühlwärmetauscher 6. Um im Produktkühlwärmetauscher 9 eine Gegenströmung des Kühlmediums mit dem zu kühlenden Prozessgas zu bewirken, wird in den Ausführungsbeispielen nach Fig. 1 und Fig. 2 das Kühlmedium in der Leitung 29 außerhalb des Gehäuses 3 bis zum Kopfraum 13 geführt. Die Leitung 29 ist daher mit einer thermischen Isolierung versehen. Es ist jedoch auch möglich, das verdampfte Kühlmedium durch den Verdampfungswärmetauscher 5 hindurch zu Kopfraum 13 zu führen.

Das zu kühlende Prozessgas wird durch den Prozessgaseingang 31 in den Außenraum 22 des Produktkühlwärmetauschers 6 eingeleitet und verlässt den Produktkühlwärmetauscher 6 am Prozessgasausgang 32. Das Prozessgas kann dabei mittels hier nicht gezeigter Umlenkbleche in einen mäanderförmigen Strömungsweg durch den Produktkühlwärmetauscher 6 gezwungen werden, um einen maximalen Wärmeübertrag zu gewährleisten. Derartige Umlenkbleche sind beispielsweise aus der DE 10 2004 026 908 A1 bekannt.

Das aus der Leitung 29 in den Kopfraum des Produktkühlwärmetauschers 6 einströmende Kühlmedium durchströmt zunächst die Rohrbündel 9,9' im Gegenstrom zum Prozessgas und wird anschließend über Leitung 33 wieder dem Verdampfungswärmetauscher 5 zugeleitet, um das flüssige Kühlmedium in den Rohrbündeln 7,7' zu verdampfen. Das dabei wieder abgekühlte gasförmige Kühlmedium verlässt den Mantelraum 25 des Verdampfungswärmetauschers 5 durch die Durchführung 27 und strömt anschließend in die Rohrbündel 8,8', um dort abermals mit dem Prozessgas in Wärmeaustausch zu treten. Anschließend wird das wieder erwärmte Kühlmedium über Leitung 34 abgeleitet und kann in die Außenatmosphäre abgelassen, wiederverwertet oder einer sonstigen Verwendung zugeführt werden. Das Prozessgas wird somit sowohl an den Rohrbündeln 9,9'; 8,8' als auch am Verdampfermantel 24 durch Wärmekontakt mit dem Kühlmedium wirksam abgekühlt. Wird dabei der Taupunkt des Stoffs, der aus dem Gas entfernt werden soll, unterschritten, kondensiert dieser aus und setzt sich als Kondensat an den Außenwänden der Rohrbündel 8,8'; 9,9' bzw. des Verdampfermantels 24 ab und wird über die Leitung 23 dem Kondensatbad 17 zugeführt. Das Kondensat kann über einen hier nicht gezeigten Kondensatauslass abgelassen und entsorgt, bzw. einer weiteren Verwendung zugeführt werden.

Die in Fig. 2 gezeigte Apparatur 35 unterscheidet sich von der Apparatur 1 durch einen sogenannten Rekuperator, d.h. durch einen zusätzlichen Wärmetauscher, in der das zu kühlende bzw. reinigende Prozessgas zusätzlich durch Wärmetausch mit bereits gekühltem bzw. gereinigtem Prozessgas gekühlt wird. Im Übrigen sind bei der Apparatur 35 funktionsgleiche Elemente mit den gleichen Bezugsziffern versehen wie bei der Apparatur 1.

Der Rekuperator wird bei der Apparatur 35 durch Rohrbündel 36, 36' realisiert, die außenseitig am Produktkühlwärmetauscher 6, jedoch noch innerhalb des Gehäuses 3 des Kondensators 2 angeordnet sind. Die Rohrbündel 36, 36' erstrecken sich wie die Rohrbündel 8,8'; 9,9' durch den Produktkühlwärmetauscher 6 hindurch und sind über den Kopfraum 13 sowie den Bodenbereich 16 des Kondensators 2 miteinander verbunden, jedoch über zusätzliche Trennelemente 37, 38 strömungstechnisch von den übrigen Rohrbündeln 7,7'; 8,8'; 9,9' getrennt. Damit der Kälteinhalt des gereinigten Prozessgases wirksam genutzt werden kann, erfolgt der Wärmetausch mit dem Prozessgas nur im unterem Bereich des Kondensators 2. In diesem Bereich weist das aus dem Prozessgaseingang einströmende Prozessgas eine Temperatur auf, die deutlich über der Temperatur des gereinigten Prozessgases liegt. Daher sind die Rohrbündel 36,36' gegenüber den Rohrbündeln 8,8'; 9,9' verkürzt und erstrecken sich vom Trennblech 12 nicht bis zur Höhe des Trennbleches 11, sondern enden in Richtung auf den Prozessgaseingang 31 beabstandet von diesem. Demzufolge ist der durch das zumindest teilweise isolierend wirkende Trennelement 37 abgetrennte äußere Kopfraum 39 im Bereich des Rekuperators entsprechend weit nach unten vorgeschoben. Der Bereich, in dem das gereinigte Prozessgas noch wirksam zur Kühlung eingesetzt werden kann, hängt dabei vom Aufbau der jeweiligen Apparatur ab. Insbesondre kann durch den Einbau geeigneter Strömungsbleche der Wärmeübertrag auf das gereinigte Prozessgas optimiert werden. Durch eine Austrittsöffnung 40 tritt das im Produktkühlwärmetauscher 6 abgekühlte und gereinigte Prozessgas (Reingas) in den äußeren Kopfraum 39 des Kondensators 2 ein und wird von dort aus im Gegenstrom zum Prozessgas im Produktkühlwärmetauscher 6 durch die Rohrbündel 36,36' hindurch geführt, wobei das Reingas mit dem Prozessgas in Wärmeaustausch tritt. Die im Reingas enthaltene Restkälte kann auf diese Weise zur Kühlung des Prozessgases genutzt werden. Nach Durchlaufen der Rohrbündel 36,36' wird das Reingas über einen Reingasausgang 41 abgeführt.

Die erfindungsgemäße Vorrichtung eignet sich zur Kühlung gasförmiger oder flüssiger Stoffstrome; insbesondere ermöglicht sie eine hocheffiziente Reinigung von mit gas- oder dampfförmigen Stoffen belasteten Gasströmen bei geringen Wärme- und Druckverlusten. Durch die kompakte Bauweise ergebend sich erhebliche Ersparnisse aufgrund eines geringeren Aufwandes für die Verrohrung außerhalb der Wärmetauscher und für Isolation.

### Bezugszeichenliste

- 1: Vorrichtung
- 2: Kondensator
- 3: Gehäuse
- 4: -
- 5: Verdampfungswärmetauscher
- 6: Prouktkühlwärmetauscher
- 7, 7': Rohrbündel
- 8, 8': Rohrbündel
- 9, 9': Rohrbündel
- 10: -
- 11: Trennblech
- 12: Trennblech
- 13: Kopfraum
- 14: Trennelement
- 15: -
- 16: Bodenbereich
- 17: Kondensatbad
- 18: -
- 19: Trennelement
- 20: Trennelement
- 21: -
- 22: Außenraum (des Produktkühlwärmetauschers)
- 23: Leitung
- 24: Verdampfermantel
- 25: Mantelraum (des Verdampferwärmetauschers)
- 26: -
- 27: Durchführung
- 28: Leitung
- 29: Leitung
- 30: -
- 31: Prozessgaseingang
- 32: Prozessgasausgang
- 33: Leitung
- 34: Leitung
- 35: Apparatur
- 36, 36': Rohrbündel
- 37: Trennelement
- 38: Trennelement
- 39: Äußerer Kopfraum
- 40: Austrittsöffnung
- 41: Reingasausgang

## Patentansprüche

1. Vorrichtung zum Kühlen eines Stoffstroms, mit einem Verdampfungswärmetauscher (5) zum Verdampfen eines kondensierten Gases durch Wärmetausch mit einem gasförmigen Medium, der eine Zuleitung (28) für das kondensierte Gas und eine Ableitung (29) für verdampftes Gas sowie eine Zuleitung (33) und eine Ableitung (27) für das gasförmige Medium aufweist, und mit einem Produktkühlwärmetauscher (6) zum Kühlen eines Stoffstroms, der eine Zuführung (31) und eine Ableitung (32,40) für den zu kühlenden Stoffstrom, eine Zuführung und eine Ableitung für ein Kühlmedium sowie Wärmetauscherflächen (9,9') zum Wärmetausch des Stoffstroms mit dem Kühlmedium aufweist, wobei die Zuführung für das Kühlmedium mit der Ableitung (29) für das verdampfte Gas aus dem Verdampfungswärmetauscher (5) strömungsverbunden ist, und der Verdampfungswärmetauscher (5) im Produktkühlwärmetauscher (6) aufgenommen und mit einer Wärmetauscherfläche (24) zum Wärmetausch mit dem Stoffstrom im Produktkühlwärmetauscher (6) ausgerüstet ist, wobei
die Ableitung für das Kühlmedium im Produktkühlwärmetauscher (6) mit der Zuleitung (33) für das gasförmige Medium im Verdampfungswärmetauscher (5) strömungsverbunden ist,
**dadurch gekennzeichnet,**
**dass** der Produktkühlwärmetauscher (6) eine Zuführung und eine Ableitung für ein zweites Kühlmedium sowie Wärmetauscherflächen (8,8') zum Wärmetausch des Stoffstroms mit dem Kühlmedium aus der zweiten Zuführung umfasst, wobei die Zuführung für das zweite Kühlmedium mit der Ableitung (27) für das gasförmige Medium aus dem Verdampfungswärmetauscher (5) strömungsverbunden ist.

2. Vorrichtung nach Anspruch 1,
**dadurch gekennzeichnet,**
**dass** im Produktkühlwärmetauscher (6) die Wärmetauscherflächen (9,9') und die Wärmetauscherflächen (8,8') als zumindest abschnittsweise parallel geführte Rohrbündel ausgeführt sind, die innerhalb eines gemeinsamen Gehäuses (3) von dem zu kühlenden Stoffstrom umströmt werden.

3. Vorrichtung nach Anspruch 1 oder 2, **dadurch gekennzeichnet, dass** das Kühlmedium und/oder das zweite Kühlmedium im Produktkühlwärmetauscher (6) im Gegenstrom zum Stoffstrom geführt wird/werden.

4. Vorrichtung nach einem der vorhergehenden Ansprüche, **dadurch gekennzeichnet, dass** eine Ableitung (39) für den Stoffstrom aus dem Produktkühlwärmetauscher (6) mit einer Wärmetauscherfläche (36,36') im Produktkühlwärmetauscher (6) strömungsverbunden ist, an der der aus dem Produktkühlwärmetauscher (6) geführte Stoffstrom mit dem zu kühlenden Stoffstrom im Produktkühlwärmetauscher (6) in Wärmeaustausch steht.

5. Vorrichtung nach einem der vorhergehenden Ansprüche, **dadurch gekennzeichnet, dass** der Produktkühlwärmetauscher (6) mit Mitteln zum Ableiten (23,17) von kondensierten Bestandteilen ausgerüstet ist.

6. Vorrichtung nach einem der vorhergehenden Ansprüche, **dadurch gekennzeichnet, dass** der Verdampfungswärmetauscher (5) ein in einem vom gasförmigen Medium durchströmten Mantel (24) aufgenommenes und vom zu verdampfenden Gas durchströmtes Röhrbündel (7,7') umfasst, wobei das zur Verdampfung des kryogenen Kühlmediums eingesetzte gasförmige Medium an zumindest Abschnitten des Mantels (24) mit dem Stoffstrom in Wärmeaustausch steht.

## Claims

1. Apparatus for cooling a material flow, having an evaporating heat exchanger (5) for evaporating a condensed gas by exchange of heat with a gaseous medium, which heat exchanger has a supply line (28) for the condensed gas and a discharge line (29) for evaporated gas, and a supply line (33) and a discharge line (27) for the gaseous medium, and having a product cooling heat exchanger (6) for cooling a material flow, which latter heat exchanger has a supply (31) and a discharge line (32, 40) for the material flow to be cooled, a supply and a discharge line for a coolant and heat exchanger surfaces (9, 9') for exchange of heat between the material flow and the coolant, wherein the supply for the coolant is fluidically connected with the discharge line (29) for the evaporated gas from the evaporating heat exchanger (5), and the evaporating heat exchanger (5) is accommodated within the product cooling heat exchanger (6) and is equipped with a heat exchanger surface (24) for exchange of heat with the material flow in the product cooling heat exchanger (6), wherein
the discharge line for the coolant in the product cooling heat exchanger (6) is fluidically connected with the supply line (33) for the gaseous medium in the evaporating heat exchanger (5)
**characterized in that**
the product cooling heat exchanger (6) comprises a supply and a discharge line for a second coolant and heat exchanger surfaces (8, 8') for exchange of heat between the material flow and the coolant from the second supply, wherein the supply for the second coolant is fluidically connected with the discharge line (27) for the gaseous medium from the evaporating heat exchanger (5).

2. Apparatus according to Claim 1,
**characterized in that**,
in the product cooling heat exchanger (6), the heat exchanger surfaces (9, 9') and the heat exchanger surfaces (8, 8') are designed as pipe bundles which are guided in parallel at least in sections and around which the material flow to be cooled flows within a common housing (3).

3. Apparatus according to Claim 1 or 2, **characterized in that** the coolant and/or the second coolant is/are guided in the product cooling heat exchanger (6) in the opposite flow direction to the material flow.

4. Apparatus according to one of the preceding claims, **characterized in that** a discharge line (39) for the material flow from the product cooling heat exchanger (6) is fluidically connected with a heat exchanger surface (36, 36') in the product cooling heat exchanger (6), at which surface the material flow guided out of the product cooling heat exchanger (6) is in exchange of heat with the material flow - which is to be cooled - in the product cooling heat exchanger (6).

5. Apparatus according to one of the preceding claims, **characterized in that** the product cooling heat exchanger (6) is equipped with means for discharging (23, 17) condensed components.

6. Apparatus according to one of the preceding claims, **characterized in that** the evaporating heat exchanger (5) comprises a pipe bundle (7, 7') though which flows the gas to be evaporated and which is accommodated in a jacket (24) through which flows the gaseous medium, wherein the gaseous medium employed for evaporating the cryogenic coolant is in exchange of heat with the material flow at least at sections of the jacket (24).

## Revendications

1. Dispositif de refroidissement d'un flux de matière, comprenant un échangeur de chaleur à évaporation (5) pour l'évaporation d'un gaz condensé par échange de chaleur avec un milieu gazeux, lequel échangeur de chaleur à évaporation comprend une conduite d'alimentation (28) pour le gaz condensé et une conduite d'évacuation (29) pour du gaz évaporé ainsi qu'une conduite d'alimentation (33) et une conduite d'évacuation (27) pour le milieu gazeux, et comprenant un échangeur de chaleur de refroidissement de produit (6) pour refroidir un flux de matière, lequel échangeur de chaleur de refroidissement de produit comprend une alimentation (31) et une conduite d'évacuation (32, 40) pour le flux de matière à refroidir, une alimentation et une conduite d'évacuation pour un agent réfrigérant ainsi que des surfaces d'échangeur de chaleur (9, 9') pour l'échange de chaleur du flux de matière avec l'agent réfrigérant, l'alimentation pour l'agent réfrigérant étant en liaison fluidique avec la conduite d'évacuation (29) pour le gaz évaporé provenant de l'échangeur de chaleur à évaporation (5), et l'échangeur de chaleur à évaporation (5) étant reçu dans l'échangeur de chaleur de refroidissement de produit (6) et étant équipé d'une surface d'échangeur de chaleur (24) pour l'échange de chaleur avec le flux de matière dans l'échangeur de chaleur de refroidissement de produit (6),
la conduite d'évacuation pour l'agent réfrigérant dans l'échangeur de chaleur de refroidissement de produit (6) étant en liaison fluidique avec la conduite d'alimentation (33) pour le milieu gazeux dans l'échangeur de chaleur à évaporation (5),
**caractérisé en ce que**
l'échangeur de chaleur de refroidissement de produit (6) comporte une alimentation et une conduite d'évacuation pour un deuxième agent réfrigérant ainsi que des surfaces d'échangeur de chaleur (8, 8') pour l'échange de chaleur du flux de matière avec l'agent réfrigérant provenant de la deuxième alimentation, l'alimentation pour le deuxième agent réfrigérant étant en liaison fluidique avec la conduite d'évacuation (27) pour le milieu gazeux provenant de l'échangeur de chaleur à évaporation (5).

2. Dispositif selon la revendication 1,
**caractérisé en ce que**,
dans l'échangeur de chaleur de refroidissement de produit (6), les surfaces d'échangeur de chaleur (9, 9') et les surfaces d'échangeur de chaleur (8, 8') sont réalisées sous forme de faisceaux de tubes guidés parallèlement au moins par sections, autour desquels le flux de matière à refroidir s'écoule à l'intérieur d'un boîtier commun (3).

3. Dispositif selon la revendication 1 ou 2, **caractérisé en ce que** l'agent réfrigérant et/ou le deuxième agent réfrigérant sont guidés dans l'échangeur de chaleur de refroidissement de produit (6) en contre-courant par rapport au flux de matière.

4. Dispositif selon l'une quelconque des revendications précédentes, **caractérisé en ce qu'**une conduite d'évacuation (39) pour le flux de matière provenant de l'échangeur de chaleur de refroidissement de produit (6) est en liaison fluidique avec une surface d'échangeur de chaleur (36, 36') dans l'échangeur de chaleur de refroidissement de produit (6), au niveau de laquelle le flux de matière guidé hors de l'échangeur de chaleur de refroidissement de produit (6) est en échange de chaleur avec le flux de matière à refroidir dans l'échangeur de chaleur de refroidissement de produit (6).

5. Dispositif selon l'une quelconque des revendications précédentes, **caractérisé en ce que** l'échangeur de chaleur de refroidissement de produit (6) est équipé de moyens pour l'évacuation (23, 17) de composants condensés.

6. Dispositif selon l'une quelconque des revendications précédentes, **caractérisé en ce que** l'échangeur de chaleur à évaporation (5) comporte un faisceau de tubes (7, 7') reçu dans une enveloppe (24) à travers laquelle s'écoule le milieu gazeux et à travers lequel s'écoule le gaz à évaporer, le milieu gazeux utilisé pour l'évaporation de l'agent réfrigérant cryogénique étant en échange de chaleur avec le flux de matière au niveau d'au moins des sections de l'enveloppe (24).
